Europäisches Patentamt

European Patent Office

Office européen des brevets

(11) Numéro de publication: **0 160 245**
**A1**

## DEMANDE DE BREVET EUROPEEN

(21) Numéro de dépôt: 85104552.6

(22) Date de dépôt: 16.04.85

(51) Int. Cl.⁴: **F 01 L 13/02**
**F 16 H 53/06, B 23 Q 35/26**

(30) Priorité: 18.04.84 FR 8406126

(43) Date de publication de la demande;
06.11.85 Bulletin 85/45

(84) Etats contractants désignés:
BE CH DE FR GB IT LI NL SE

(71) Demandeur: SOCIETE D'ETUDES DE MACHINES
THERMIQUES S.E.M.T.
2, Quai de Seine
F-93202 Saint-Denis(FR)

(72) Inventeur: Magnet, Jean-Louis
7, Allée des Vergers Le Parc des Chenets
F-71800 St-Germain en Laye(FR)

(74) Mandataire: Weinmiller, Jürgen et al,
Zeppelinstrasse 63
D-8000 München 80(DE)

(54) Procédé de changement du sens de rotation d'un moteur à combustion interne et moteur faisant application de ce procédé.

(57) Procédé de changement du sens de rotation d'un moteur à combustion interne, et moteur faisant application de ce procédé.

La présente invention concerne un procédé de changement du sens de rotation d'un moteur à combustion interne, notamment d'un moteur marin, dans lequel les arbres à cames (15) comportent, pour chaque poussoir (20) d'un organe commandé, deux cames (16, 17) réservées chacune à un sens de rotation, le changement du sens de rotation du moteur étant obtenu par translation desdits arbres à cames, caractérisé en ce que l'on effectue, préalablement à la translation des arbres à cames, une rotation d'un quart de tour des poussoirs de manière à rendre l'axe de rotation du galet (10) de chaque poussoir (20) orthogonal à la direction de translation des arbres à cames.

Elle concerne également un moteur faisant application de ce procédé.

Application aux gros moteurs marins.

FIG.1

Procédé de changement du sens de rotation d'un moteur à combustion interne, et moteur faisant application de ce procédé

La présente invention concerne le changement du sens de rotation d'un moteur à combustion interne.

Les gros moteurs à combustion interne, et notamment les moteurs marins, sont généralement réversibles car le couple à transmettre est trop important pour utiliser des inverseurs du sens de rotation d'un encombrement raisonnable et de construction simple.

D'une manière connue, les arbres à cames de ces moteurs sont pourvus de cames supplémentaires pour modifier les temps d'ouverture des soupapes d'admission et d'échappement ainsi que les temps d'injection du combustible dans les cylindres.

Chaque arbre à cames comporte alors deux cames par organe commandé, l'une pour un sens de rotation, et l'autre, angulairement symétrique de la première par rapport à un point mort de l'arbre-manivelles, pour l'autre sens de rotation.

Le changement du sens de rotation s'effectue moteur arrêté, par translation des arbres à cames. Pour passer d'une came à l'autre, les galets des poussoirs glissent sur ces cames sans roulement, ce qui provoque une usure importante des chemins de roulement des galets et des cames.

La présente invention a pour but de supprimer l'usure des chemins de roulement et des rampes de raccordement des cames en remplaçant le glissement sans roulement par un roulement sans glissement. L'effort nécessaire à la translation des arbres à cames s'en trouve considérablement réduit.

La présente invention a pour objet un procédé de changement du sens de rotation d'un moteur à combustion interne, notamment d'un moteur marin, dans lequel les arbres à cames comportent, pour chaque poussoir d'un organe commandé, deux cames réunies par une surface de raccordement et réservées chacune à un sens de rotation, le changement du sens de rotation du moteur étant obtenu par translation desdits arbres à cames, caractérisé en ce que l'on effectue, préalablement à la translation des arbres à cames, une rotation d'un quart de tour des poussoirs de manière à rendre l'axe de rotation du galet de chaque poussoir orthogonal à la direction de translation des arbres à cames.

D'une manière préférentielle, on effectue, préalablement à la rotation des poussoirs, un détarage des ressorts de rappel des soupapes, et avantageusement, on effectue un détarage des ressorts égal à au moins la moitié de la valeur du tarage initial.

D'une autre manière préférentielle, on asservit la translation des arbres à cames à l'opération préalable de rotation des poussoirs et de détarage des ressorts de rappel des soupapes.

La présente invention à également pour objet un moteur faisant application de ce procédé. Selon un exemple préférentiel de réalisation, ce moteur est caractérisé en ce qu'il comporte au moins une crémaillère munie d'une denture et en ce que chaque poussoir comporte un secteur denté engrènant avec la denture. Bien entendu, la rotation des poussoirs peut être obtenue par d'autres moyens mécaniques définissant d'autres moteurs faisant application de ce procédé.

Il est décrit ci-après, en référence aux dessins annexés, l'exemple préférentiel du moteur à combustion interne faisant application du procédé selon l'invention.

La figure 1 représente, en coupe, un poussoir et deux cames associées employées chacune pour un sens de rotation du moteur.

La figure 2 représente, en coupe suivant II de la figure 1, deux poussoirs d'un même cylindre.

La figure 3 représente, suivant III de la figure 1 le poussoir après rotation d'un quart de tour.

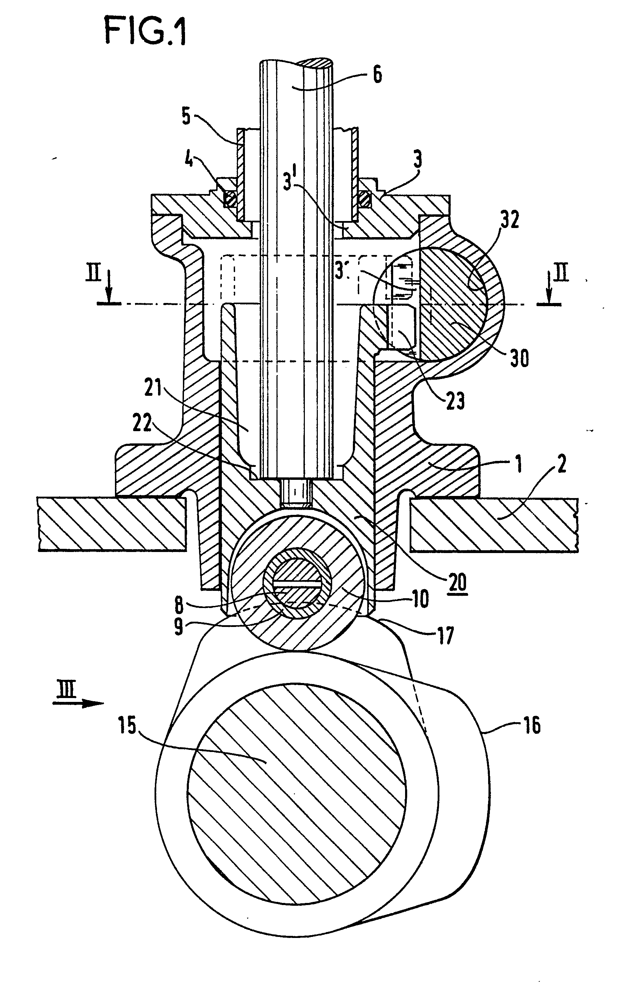

Dans la figure 1, il est représenté un guide-poussoir 1, fixé par des moyens connus, non représentés, à une pièce 2 solidaire du moteur et recouvert par un couvercle 3 muni d'un joint torique 4. Un tube 5, placé en butée sur un épaulement 3'du couvercle 3, protége une tige de poussoir 6.

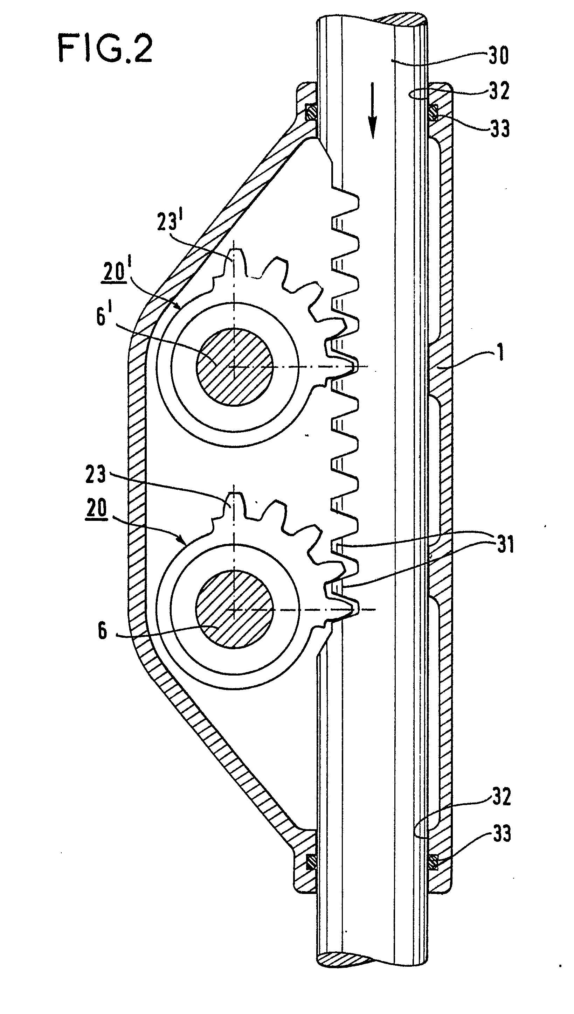

Dans ce guide-poussoir 1, il est représenté un seul poussoir 20 sur les deux que comporte généralement un guide-poussoir (un pour l'échappement, un pour l'admission), le deuxième 20' étant visible en figure 2. Ce poussoir 20 comporte un axe 8 sur lequel tourne un galet 10 muni d'un coussinet 9, et un logement 21 pourvu d'un épaulement 22 sur lequel prend appui la tige de poussoir 6.

Le poussoir 20 comporte également une denture droite 23 qui engrène avec une denture droite 31 d'une crémaillère 30, ces deux dentures étant taillées parallèlement à la direction de déplacement du poussoir 20 pour permettre sa libre translation dans le guide-poussoir 1.

Le galet 10 du poussoir 20 est en appui sur une came 16 d'un arbre à cames 15 qui comporte également une came 17, la came 16 et la came 17 étant chacune prévue pour un sens de rotation et décalée angulairement en conséquence. Le galet 10 est constamment en appui sur l'une ou l'autre came grâce à un ressort de rappel non représenté, car placé généralement au niveau des soupapes.

La figure 2 représente les deux poussoirs 20, 20' du guide-poussoirs 1. Ces deux poussoirs sont les poussoirs d'admission et d'échappement d'un seul cylindre. La crémaillère 30 est guidée dans des alésages 32 du guide-poussoir 1 et chaque alésage comporte un joint torique 33. Elle est entrainée et bloquée en rotation par un mécanisme non représenté et connu en soi.

Les deux poussoirs 20, 20' comportent chacun une denture 23, 23' développée sur au moins un quart de leur circonférence, et la crémaillère 30 comporte une denture 31 qui, lors du déplacement linéaire de la crémaillère 30, entraîne en rotation les deux poussoirs 20, 20'. Pour effectuer une rotation d'un quart de tour des poussoirs, il suffit de déplacer la crémaillère d'une valeur appropriée.

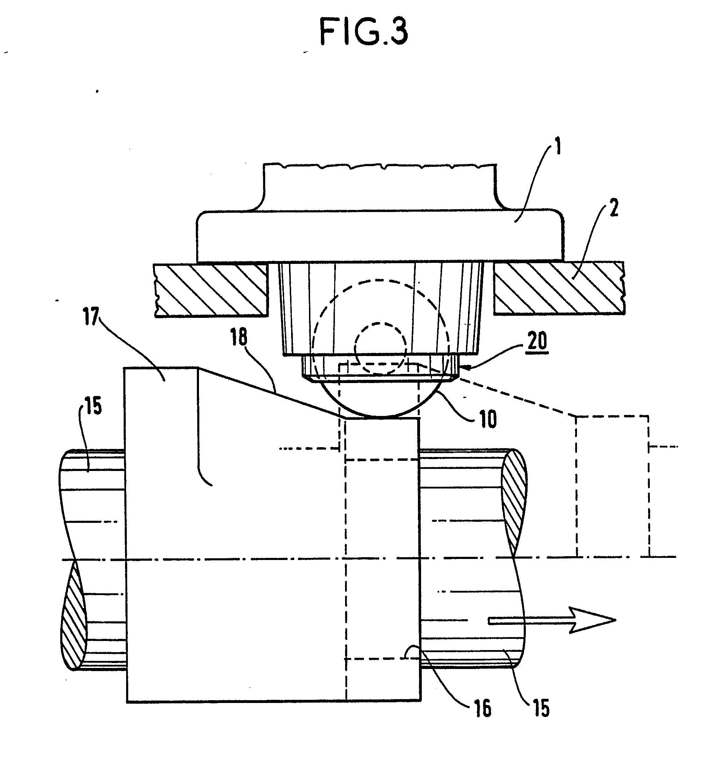

La figure 3 représente suivant III de la figure 1, le poussoir 20 après sa rotation d'un quart de tour dans le guide-poussoir 1. Le galet 10 est toujours en appui sur la came 16 mais son axe de rotation est orthogonal à la direction de translation de l'arbre à cames. Au cours de la translation de l'arbre à cames 15 par un moyen quelconque connu, le galet roule successivement sur la came 16, sur une partie intermédiaire 18 et sur l'autre came 17. Dès que l'arbre à cames est en butée, le galet est en appui sur la came 17 et on peut alors effectuer une rotation inverse du poussoir d'un quart de tour pour le ramener dans sa position initiale qui est sa position de travail en marche normale.

Une opération de changement de sens de rotation d'un moteur se déroule de la manière suivante :

- on coupe l'injection de combustible, et dès que le moteur est arrêté,

- on détare éventuellement les ressorts de rappel des organes commandés,

- on fait tourner d'un quart de tour tous les poussoirs du moteur par un déplacement longitudinal approprié de la crémaillère 30,

- on effectue une translation des arbres à cames 15 pour faire passer chaque galet des cames 16 aux cames 17,

- on fait tourner à nouveau les poussoirs d'un quart de tour, mais en sens inverse, pour les ramener dans leur position initiale,

- on rétablit éventuellement le tarage des ressorts de rappel,

- on lance le moteur à l'air comprimé dans l'autre sens de rotation,

- on injecte du combustible.

Bien entendu, la succession de ces opérations peut être automatisée, l'exécution de chaque séquence étant asservie à l'exécution de la séquence précédente.

0160245

REVENDICATIONS

1/ Procédé de changement du sens de rotation d'un moteur à combustion interne, notamment d'un moteur marin, dans lequel les arbres à cames (15) comportent, pour chaque poussoir (20) d'un organe commandé, deux cames (16, 17) réservées chacune à un sens de rotation, le changement du sens de rotation du moteur étant obtenu par translation desdits arbres à cames, caractérisé en ce que l'on effectue, préalablement à la translation des arbres à cames, une rotation d'un quart de tour des poussoirs de manière à rendre l'axe de rotation du galet (10) de chaque poussoir (20) orthogonal à la direction de translation des arbres à cames.

2/ Procédé selon la revendication 1, caractérisé en ce que l'on effectue, préalablement à la rotation des poussoirs, un détarage des ressorts de rappel des soupapes.

3/ Procédé selon la revendication 2, caractérisé en ce que l'on effectue un détarage des ressorts égal à au moins la moitié de la valeur du tarage initial.

4/ Procédé selon au moins l'une des revendications 1 à 3, caractérisé en ce que l'on asservit la translation des arbres à cames à l'opération préalable de rotation des poussoirs.

5/ Moteur faisant application du procédé selon l'une des revendications 1 à 4, caractérisé en ce qu'il comporte au moins une crémaillère (30) munie d'une denture (31), et en ce que chaque poussoir (20) comporte un secteur denté (23) engrènant avec la denture (31).

0160245

FIG.1

0160245

## FIG.2

0160245

# FIG.3

Office européen
des brevets

**RAPPORT DE RECHERCHE EUROPEENNE**

0160245
Numéro de la demande

EP 85 10 4552

## DOCUMENTS CONSIDERES COMME PERTINENTS

| Catégorie | Citation du document avec indication en cas de besoin des parties pertinentes | Revendication concernée | CLASSEMENT DE LA DEMANDE (Int. Cl.4) |
|---|---|---|---|
| A | DE-C- 864 779 (DAIMLER - BENZ) <br> * Page 2, lignes 1-28; figure * | 1,2 | F 01 L 13/02 <br> F 16 H 53/06 <br> B 23 Q 35/26 |
| A | DE-C- 571 022 (SULZER) <br> * Page 1, ligne 1 - page 2, ligne 19; figures * | 1 | |
| A | GB-A- 14 591 (KOENEMANN)(A.D.1912) <br> * Page 1, lignes 5-28; figures 1-3 * | 1 | |
| A | DE-C- 750 862 (DÖRR) <br> * Page 1, ligne 32 - page 2, ligne 13; figures 1-4 * | 1 | |
| A | US-A-2 151 832 (BUGATTI) <br> * Page 2, lignes 61-73; figure 5 * | 1 | **DOMAINES TECHNIQUES RECHERCHES (Int. Cl.4)** |
| A | FR-A- 382 292 (DETROIT STEAM ENGINE CO.) | | F 01 L <br> F 16 H <br> B 23 Q <br> F 02 D <br> F 02 M |
| A | FR-A- 890 624 (DAIMLER-BENZ) | | |
| A | FR-A-1 427 090 (S.E.M.T.) | | |

Le présent rapport de recherche a été établi pour toutes les revendications

| Lieu de la recherche <br> LA HAYE | Date d'achèvement de la recherche <br> 03-07-1985 | Examinateur <br> KOOIJMAN F.G.M. |
|---|---|---|